# EUROPÄISCHE PATENTSCHRIFT

(11) **EP 2 694 823 B1**
(45) Veröffentlichungstag und Bekanntmachung des Hinweises auf die Patenterteilung: **13.04.2016**
(21) Anmeldenummer: 12725674.1
(22) Anmeldetag: 23.05.2012
(51) Int. Cl.: F16B 1/00

(54) **BEFESTIGUNGSELEMENT ZUR VERBINDUNG VON BAUTEILEN AUS VERSCHIEDENEN MATERIALIEN**
ATTACHMENT ELEMENT FOR CONNECTING COMPONENTS MADE OF DIFFERENT MATERIALS
ÉLÉMENT DE FIXATION POUR RELIER DES COMPOSANTS DE MATÉRIAUX DIFFÉRENTS

(30) Priorität: 31.05.2011 DE 102011076799
(43) Veröffentlichungstag der Anmeldung: 12.02.2014
(73) Patentinhaber: Siemens Aktiengesellschaft, 80333 München (DE)
(72) Erfinder: KÜBEL, Tobias, 91207 Lauf a. d. Peg. (DE); MRUGALLA, Harry, 90547 Stein (DE); NICKL, Thomas, 91757 Treuchtlingen (DE)
(86) Internationale Anmeldenummer: PCT/EP2012/059555
(87) Internationale Veröffentlichungsnummer: WO 2012/163750

(56) Entgegenhaltungen:
- DE-A1- 10 333 314
- US-A1- 2005 156 308

## Beschreibung

Die Erfindung bezieht sich auf ein Befestigungselement zur Verbindung eines ersten Bauteils mit einem zweiten Bauteil, wobei das erste und das zweite Bauteil aus verschiedenen Materialien hergestellt sind, wobei das Befestigungselement aus einem Blechstreifen hergestellt ist.

Ein solches Befestigungselement für den Bereich der Halbleitertechnik ist aus der US 2005/0156308 A1 bekannt und dient zum elektrischen Kontaktieren zwischen zwei Halbleiterkomponenten.

Bei der Verbindung von Bauteilen aus verschiedenen Materialien, wie beispielsweise Aluminium/Stahl, innerhalb einer Befestigung ergibt sich im Betrieb die Problematik unterschiedlicher Wärmeausdehnungen. Solche Wärmeausdehnungen sind zu kompensieren, um eine dauerhaft zuverlässige Befestigung der Bauelemente untereinander zu gewährleisten.

Im Stand der Technik wird bisher meist der problematische Einsatz eines Befestigungselementes zur Verbindung von Bauteilen aus Materialien mit unterschiedlichen Wärmeausdehnungen vermieden. Dies geschieht in der Weise, dass gleiche Materialien eingesetzt werden.

Es existieren aber auch andere Lösungen, die eine Kompensation unterschiedlicher Wärmeausdehnungen gewährleisten, und zwar unter Einsatz elastischer Befestigungselemente, wie beispielsweise Gummilager.

Die Vermeidung verschiedener Materialien hat den Nachteil, dass beispielsweise nicht für einen jeweiligen Anwendungszweck das jeweils günstigste Material einsetzbar ist. Der Einsatz von Gummilagern hat den Nachteil, dass die Funktions- und Lebensdauer eingeschränkt ist, ein Austausch der Gummilager erforderlich wird.

Ausgehend hiervon liegt der Erfindung die Aufgabe zugrunde, ein Befestigungselement zur Verbindung eines ersten Bauteils mit einem zweiten Bauteil zu schaffen, das den Einsatz unterschiedlicher Materialien für das erste und das zweite Bauteil gestattet und gleichzeitig eine zuverlässige Verbindung zwischen den Bauteilen auch bei Auftreten von Temperaturänderungen gewährleistet.

Diese Aufgabe wird dadurch gelöst, dass das Befestigungselement wenigstens zwei, in einer gemeinsamen Ebene liegende Befestigungslaschen aufweist, zwischen denen das Befestigungselement einen elastischen Bogen zum Ausgleich von Längenänderungen zwischen den beiden Befestigungslaschen und einen Befestigungspunkt für das zweite Bauteil aufweist und, auf der dem Bogen gegenüberliegenden Seite des Befestigungspunktes und einwärts der auf dieser Seite befindlichen Befestigungslasche ein gleichartiger weiterer Bogen vorgesehen ist.

Der typischerweise etwa Ω-förmgige Bogen gestattet es, dass Längenänderungen aufgrund von Wärmeausdehnung des ersten Bauteils zwischen den beiden Befestigungslaschen zulässt. Dabei ist der Blechstreifen von im Wesentlichen gleichbleibender Materialdicke. Durch die Formgebung des Befestigungselementes wird jedoch eine Kompensation von Längenänderungen gestattet, die im Bereich des elastischen Bogens erfolgt.

Der Befestigungspunkt für das zweite Bauteil kann in einem ebenen zentralen Abschnitt des Befestigungselementes liegen, wobei dann die Ebene dieses zentralen Abschnitts senkrecht zu der von den wenigstens zwei Befestigungslaschen aufgespannten Ebene stehen kann. In dieser Weise lassen sich die beiden zu verbindenden Bauteile in parallelen Ebenen oder auch in derselben Ebene anordnen.

An den zentralen Abschnitt kann sich nach außen der Bogen anschließen, welcher wiederum unter einem rechten Winkel mit einer der Befestigungslaschen verbunden ist.

Auf der dem Bogen gegenüberliegenden Seite des Befestigungspunktes und einwärts der auf dieser Seite befindlichen Befestigungslasche ist ein gleichartiger weiterer Bogen vorgesehen. In diesem Fall dienen beide vorgesehenen Bögen zur Kompensation von Wärmeausdehnungen.

Das Befestigungselement kann besonders platzsparend ausgeführt sein, wenn es bezüglich einer durch den Befestigungspunkt für das zweite Bauteil verlaufende Querebene symmetrisch ausgebildet ist. Jedoch ist es durchaus möglich, dass beispielsweise der Befestigungspunkt für das zweite Bauteil in unterschiedlichem Abstand zu den jeweiligen, seitlich angeordneten Bögen und Befestigungslaschen liegt. Auch ist ein unmittelbarer Übergang von einem Bogen zu einer Befestigungslasche für die Wirkung der Erfindung nicht zwingend erforderlich.

Ein Ausführungsbeispiel der Erfindung wird nachfolgend unter Bezugnahme auf die Zeichnung noch näher erläutert. Die einzige Figur zeigt eine perspektivische Ansicht eines Befestigungselementes zur Verbindung zweier Bauteile aus verschiedenen Material, wobei eines der Bauteile mit dargestellt ist.

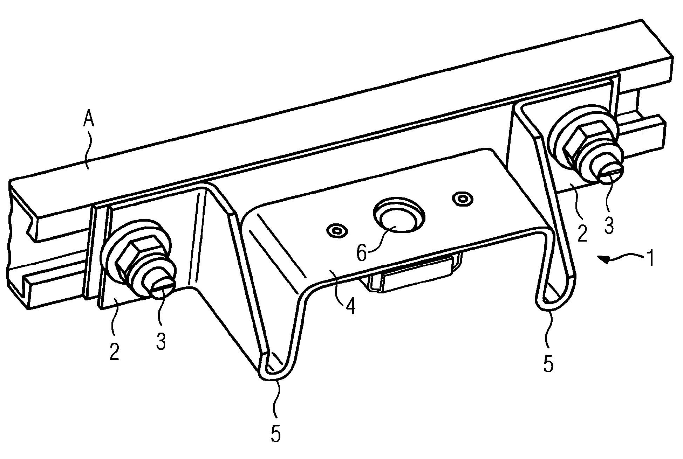

Das in Figur 1 gezeigte Befestigungselement 1 liegt als Blechstreifen vor, an dessen Enden jeweils eine Befestigungslasche 2 vorgesehen ist. Über die Befestigungslaschen 2 ist das Befestigungselement 1 an ein erstes Bauteil A angeschlossen, bei dem es sich hier um einen als C-Schiene vorliegenden Stringer eines Schienenfahrzeugrohbaus handelt. Das Material des ersten Bauteils A ist Stahl. Dabei erfolgt eine Befestigung mit Hilfe von in die C-Schiene eingreifenden Nutensteinen (nicht dargestellt) in Kombination mit Schraub-Befestigungsmitteln 3.

Von den Befestigungslaschen 2 aus ist das Befestigungselement 1, dessen Material frei wahlbar ist, in einem etwa rechten Winkel abgeknickt, und zwar in entgegengesetzter Richtung des ersten Bauteils A.

Das Befestigungselement 1 zeigt einen zentralen, ebenen Abschnitt 4, der senkrecht zu derjenigen Ebene ausgerichtet ist, die von den Befestigungslaschen 2 des Befestigungselements 1 aufgespannt wird. Von dem zentralen Abschnitt 4 aus schließt sich in Richtung einer jeweiligen Befestigungslasche 2 ein Bogen 5 an. Im Detail wird der jeweilige Bogen 5 von zwei parallelen Abschnitten des Befestigungselements 1 gebildet, die untereinander durch einen Abschnitt mit etwa halbkreisförmigem Querschnitt verbunden sind. Dabei ist diejenige Wandung der Bögen 5, welche sich an die außen liegenden Befestigungslaschen 2 anschließt, abgeschrägt.

Zum Anschluss eines zweiten Bauteils, beispielsweise aus Aluminium, weist der zentrale Abschnitt 4 eine geeignete Aufnahme auf, die als Befestigungspunkt 6 für das zweite Bauteil dient.

Aufgrund der Formgebung der Bögen 5 ist das Befestigungselement 1 dazu geeignet, aufgrund von Wärmeausdehnungen auftretende Längenänderungen des ersten Bauteils A zu kompensieren. Denn die Bögen 5 verfügen über eine derartige Elastizität, dass in einem ausreichenden Maße eine Streckung/Stauchung des Befestigungselements 1 in seiner Längsrichtung möglich ist.

## Patentansprüche

1. Befestigungselement (1) zur Verbindung eines ersten Bauteils (A) mit einem zweiten Bauteil, wobei das erste und das zweite Bauteil aus verschiedenen Materialien hergestellt sind, wobei das Befestigungselement (1) aus einem Blechstreifen hergestellt ist,
**dadurch gekennzeichnet, dass**
das Befestigungselement (1) wenigstens zwei, in einer gemeinsamen Ebene liegende Befestigungslaschen (2) aufweist, zwischen denen das Befestigungselement einen elastischen Bogen (5) zum Ausgleich von Längenänderungen zwischen den beiden Befestigungslaschen (2) und einen Befestigungspunkt (6) für das zweite Bauteil aufweist und, auf der dem Bogen (5) gegenüberliegenden Seite des Befestigungspunktes (6) und einwärts der auf dieser Seite befindlichen Befestigungslasche (2) ein gleichartiger weiterer Bogen (5) vorgesehen ist.

2. Befestigungselement nach Anspruch 1,
**dadurch gekennzeichnet, dass**
der Befestigungspunkt (6) für das zweite Bauteil in einem ebenen zentralen Abschnitt (4) des Befestigungselementes liegt, wobei die Ebene dieses zentralen Abschnitts (4) senkrecht zu der von den wenigstens zwei Befestigungslaschen (2) aufgespannten Ebene steht.

3. Befestigungselement nach Anspruch 2,
**dadurch gekennzeichnet, dass**
sich an den zentralen Abschnitt (4) nach Außen der Bogen (5) anschließt, welcher wiederum unter einem rechten Winkel mit einer der Befestigungslaschen (2) verbunden ist.

4. Befestigungselement nach einem der Ansprüche 1 bis 3,
**dadurch gekennzeichnet, dass**
es bezüglich einer durch den Befestigungspunkt (6) für das zweite Bauteil verlaufenden Querebene symmetrisch ausgebildet ist.

## Claims

1. Fastening element (1) for connecting a first component (A) to a second component, the first and the second components being manufactured from different materials, the fastening element (1) being manufactured from a sheet-metal strip, **characterized in that** the fastening element (1) has at least two fastening clips (2) which lie in a common plane, the fastening element having between said fastening clips an elastic bend (5) for compensating changes in length between the two fastening clips (2) and a fastening point (6) for the second component, and an identical further bend (5) is provided on the side of the fastening point (6) which lies opposite the bend (5) and inward of the fastening clip (2) which is situated on said side.

2. Fastening element according to Claim 1,
**characterized in that**
the fastening point (6) for the second component lies in a planar central portion (4) of the fastening element, the plane of this central portion (4) being perpendicular to the plane defined by the at least two fastening clips (2).

3. Fastening element according to Claim 2,
**characterized in that**
the bend (5) adjoins the central portion (4) in the outward direction, said bend (5) being in turn connected to one of the fastening clips (2) at a right angle.

4. Fastening element according to one of Claims 1 to 3,
**characterized in that**
said fastening element is configured symmetrically in relation to a transverse plane which runs through the fastening point (6) for the second component.

## Revendications

1. Elément (1) de fixation d'une première pièce à une deuxième pièce, la première et la deuxième pièces étant en des matériaux différents, l'élément (1) de fixation étant fabriqué en une bande de tôle,
**caractérisé en ce que**
l'élément ( 1 ) de fixation a au moins deux éclisses ( 2 ) de fixation, qui sont dans un plan commun et entre lesquelles l'élément de fixation a un arceau ( 5 ) élastique pour compenser des variations de longueur entre les deux éclisses ( 2 ) de fixation et un point ( 6 ) de fixation de la deuxième pièce et il est prévu du côté, opposé à l'arceau ( 5 ), du point ( 6 ) de fixation et vers l'intérieur de l'éclisse ( 2 ) de fixation se trouvant de ce côté, un autre arceau ( 5 ) de même type.

2. Elément ( 1 ) de fixation suivant la revendication 1,
**caractérisé en ce que**
le point ( 6 ) de fixation de la deuxième pièce est dans une partie ( 4 ) plane centrale de l'élément de fixation, le plan de cette partie ( 4 ) centrale étant perpendiculaire au plan passant par les au moins deux éclisses ( 2 ) de fixation.

3. Elément ( 1 ) de fixation suivant la revendication 2,
**caractérisé en ce que** la partie ( 4 ) centrale se raccorde vers l'extérieur à l'arceau ( 5 ) , qui est relié à son tour à angle droit à l'une des éclisses ( 2 ) de fixation.

4. Elément ( 1 ) de fixation suivant l'une des revendications 1 à 3,
**caractérisé en ce qu'**
il est symétrique par rapport à un plan transversal passant par le point ( 6 ) de fixation de la deuxième pièce.
